# EUROPÄISCHE PATENTSCHRIFT

(11) **EP 3 647 739 B1**
(45) Veröffentlichungstag und Bekanntmachung des Hinweises auf die Patenterteilung: **16.12.2020**
(21) Anmeldenummer: 18203723.4
(22) Anmeldetag: 31.10.2018
(51) Int. Cl.: G01D 11/24, G01D 5/12, G01D 5/26

(54) **ABTASTEINHEIT EINER POSITIONSMESSEINRICHTUNG**
SCANNING UNIT OF A POSITIONING DEVICE
UNITÉ DE BALAYAGE D'UN DISPOSITIF DE MESURE DE POSITION

(43) Veröffentlichungstag der Anmeldung: 06.05.2020
(73) Patentinhaber: Dr. Johannes Heidenhain GmbH, 83301 Traunreut (DE)
(72) Erfinder: SULIK, Reinhard, 07747 Jena (DE); WEISE, Jörg, 99085 Erfurt (DE)

(56) Entgegenhaltungen:
- EP-A2- 2 975 357
- WO-A1-2015/049176
- DE-A1-102009 027 107
- DE-A1-102013 213 003

## Beschreibung

### GEBIET DER TECHNIK

Positionsmesseinrichtungen dienen zur Bestimmung der Position zweier zueinander bewegbarer Bauteile. Sie werden bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie zur Positionierung und Bearbeitung von Wafern eingesetzt.

Positionsmesseinrichtungen bestehen aus einem Maßstab und einer den Maßstab abtastenden Abtasteinheit. Die Anforderungen an Positionsmesseinrichtungen werden immer höher, es wird laufend eine höhere Auflösung sowie eine höhere Genauigkeit und Reproduzierbarkeit der Positionsmessung gefordert. Voraussetzung dazu ist ein kompakter und stabiler mechanischer Aufbau der Abtasteinheit.

### STAND DER TECHNIK

Eine gattungsgemäße Abtasteinheit sowie Positionsmesseinrichtung ist aus der WO 2015/049176 A1 bekannt. Die Abtasteinheit besteht aus einem Gehäuse, in dem eine Detektoreinheit angeordnet ist. Das Gehäuse besteht wiederum aus einem Grundkörper und einem am Grundkörper befestigten Deckel. Der Grundkörper weist mehrere Öffnungen zum Anschrauben der Abtasteinheit an ein zu messendes Objekt auf. Es wurde bereits erkannt, dass eine schraubenlose Befestigung des Deckels am Grundkörper einen kompakten Aufbau ermöglicht. Die schraubenlose Deckelbefestigung ist dabei durch das Fügeverfahren Crimpen realisiert. Dokumente DE 10 2013 213003 A1, DE 10 2009 027107 A1, WO 2015/049176 A1 und EP 2 975 357 A2 zeigen Abtasteinheiten, die eine Art von Presspassung nutzen.

### ZUSAMMENFASSUNG DER ERFINDUNG

Der Erfindung liegt die Aufgabe zugrunde, eine Abtasteinheit einer Positionsmesseinrichtung anzugeben, die kompakt aufgebaut ist und mit der eine präzise Positionsmessung ermöglicht wird.

Diese Aufgabe wird erfindungsgemäß durch eine Abtasteinheit mit den Merkmalen des Anspruchs 1 gelöst.

Die erfindungsgemäß ausgebildete Abtasteinheit umfasst ein Gehäuse, in dem eine Detektoreinheit zur Abtastung eines Maßstabs angeordnet ist, wobei das Gehäuse einen Grundkörper und einen am Grundkörper befestigten Deckel aufweist. Der Grundkörper weist mehrere Löcher zum Anschrauben der Abtasteinheit an ein zu messendes Objekt auf. Diese Löcher sind in Pfosten eingebracht, die am Grundkörper ausgebildet sind. Die Pfosten weisen jeweils eine Außenkontur auf, welche mit einer Innenkontur einer Ausnehmung im Deckel derart korrespondiert, dass diese eine Presspassung bilden, durch die der Deckel am Grundkörper befestigt ist.

Eine Positionsmesseinrichtung mit der erfindungsgemäßen Abtasteinheit ist im Anspruch 12 angegeben.

Diese Positionsmesseinrichtung umfasst einen Maßstab und eine Abtasteinheit nach Anspruch 1, ausgebildet zur Abtastung des Maßstabs.

Ein Verfahren zur Herstellung einer erfindungsgemäß ausgebildeten Abtasteinheit ist im Anspruch 13 angegeben.

Dieses Verfahren zur Herstellung einer Abtasteinheit umfasst folgende Verfahrensschritte:
- zur Verfügung stellen eines Grundkörpers, der einen Aufnahmeraum für eine Detektoreinheit, ausgebildet zur Abtastung eines Maßstabs, aufweist, wobei der Grundkörper mehrere Löcher zum Anschrauben der Abtasteinheit an ein zu messendes Objekt umfasst, wobei jeweils eines der Löcher in einem Pfosten des Grundkörpers eingebracht ist;
- Positionieren und Befestigen der Detektoreinheit in dem Aufnahmeraum des Grundkörpers;
- zur Verfügung stellen eines Deckels zum Abdecken des Aufnahmeraums, wobei in dem Deckel Ausnehmungen eingebracht sind, wobei jeweils eine der Ausnehmungen mit einer Außenkontur eines der Pfosten korrespondiert;
- Befestigen des Deckels am Grundkörper durch Aufpressen, wobei dadurch jeweils zwischen einer Innenkontur einer der Ausnehmungen des Deckels und einer Außenkontur eines der Pfosten eine Presspassung entsteht.

Vorteilhafte Ausbildungen der Erfindung entnimmt man den abhängigen Ansprüchen.

### KURZE BESCHREIBUNG DER ZEICHNUNGEN

Einzelheiten und Vorteile der erfindungsgemäßen Abtasteinheit ergeben sich aus der nachfolgenden Beschreibung eines Ausführungsbeispiels anhand der beiliegenden Figuren.

Es zeigen
- Figur 1: eine perspektivische Ansicht einer Positionsmesseinrichtung mit einer Abtasteinheit gemäß der Erfindung und einen die Abtasteinheit abtastenden Maßstab;
- Figur 2: die Abtasteinheit mit abgenommenem Deckel;
- Figur 3: den Deckel der Abtasteinheit, und
- Figur 4: den Grundkörper der Abtasteinheit.

### BESCHREIBUNG DER AUSFÜHRUNGSFORMEN

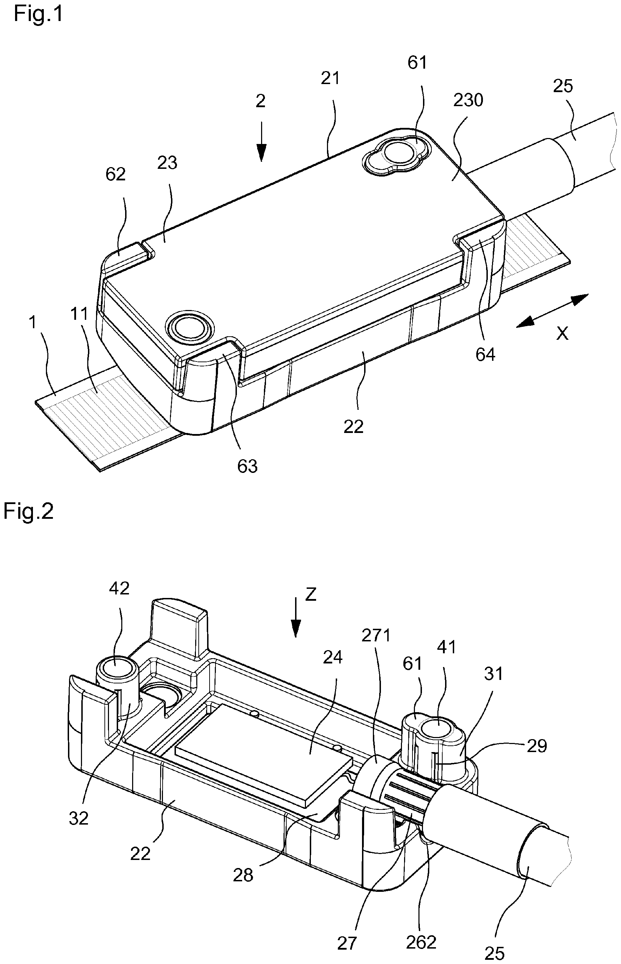

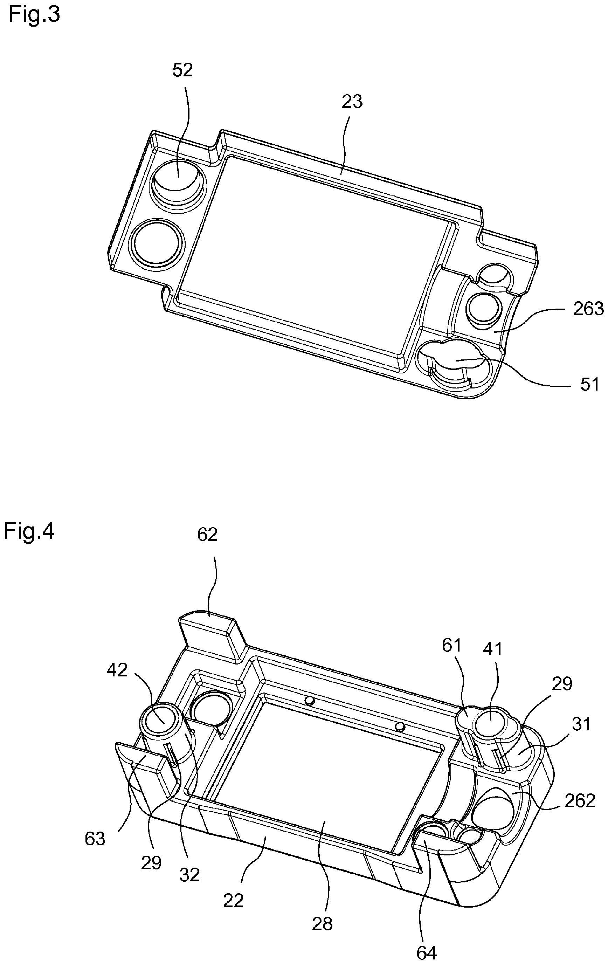

Die Erfindung wird anhand der Figuren 1 bis 4 am Beispiel einer optischen Längenmesseinrichtung erläutert, mit der die Relativlage zweier in Messrichtung X gegeneinander verschiebbarer Objekte gemessen werden soll. Dabei wird - wie in der Figur 1 schematisch dargestellt ist - ein Maßstab 1 von einer relativ dazu in Messrichtung X bewegbaren Abtasteinheit 2 abgetastet. Der Maßstab 1 weist eine Messteilung 11 auf, die von der Abtasteinheit 2 im Auflicht abgetastet wird.

Die Messteilung 11 kann eine inkrementale Messteilung oder auch eine absolute Codierung sein.

Die Erfindung ist nicht auf eine Abtasteinheit 2 zur optischen Abtastung einer Messteilung 11 beschränkt, die erfindungsgemäße Abtasteinheit 2 kann alternativ auch zur Abtastung einer magnetisch, induktiv oder kapazitiv abtastbaren Messteilung ausgebildet sein.

Die Abtasteinheit 2 weist ein Gehäuse 21 auf, das aus einem Grundkörper 22 und einem Deckel 23 besteht. Der Grundkörper 22 bildet mit dem Deckel 23 einen geschlossenen Aufnahmeraum, in dem eine Detektoreinheit 24 angeordnet ist. Die Detektoreinheit 24 umfasst eine nicht dargestellte Beleuchtungseinheit, die ein Lichtbündel aussendet, welches durch ein Fenster 28 des Grundkörpers 22 verläuft und auf den Maßstab 1 trifft, dort von der Messteilung 11 positionsanhängig moduliert reflektiert wird und schließlich auf lichtempfindliche Sensoren der Detektoreinheit 24 trifft. Das Fenster 28 im Grundkörper 22 ist mittels einer Glasplatte verschlossen, wobei die Glasplatte die Funktion einer Abtastplatte haben kann, indem diese mit einer Gitterstruktur versehen ist. Die Detektoreinheit 24 kann weitere optische Komponenten, wie z.B. eine Linse sowie elektrische Bauelemente zur Verarbeitung der Abtastsignale aufweisen, beispielsweise A/D-Wandler, Verstärker, einen Mikroprozessor sowie eine Schnittstelleneinheit.

Von der Detektoreinheit 24 werden bei der Positionsmessung positionsabhängige elektrische Abtastsignale generiert, welche über ein elektrisches Kabel 25 nach außen geleitet werden. Hierzu weist das Gehäuse 21 eine Öffnung auf. Diese Öffnung wird von einem ersten Kanal 262 im Grundkörper 22 sowie einem zweiten Kanal 263 im Deckel 23 gebildet. Die Kanäle 262, 263 sind jeweils halbkreisförmig bzw. U-förmig geformt. Im Bereich der Kanäle 262, 263 ist das Kabel 25 mit einer Crimphülse 27 versehen, mit welcher der Schirm des Kabels 25 elektrisch verbunden ist. Diese Crimphülse 27 ist im montierten Zustand zwischen den beiden Kanälen 262 und 263 angeordnet und kontaktiert damit den Grundkörper 22 und den Deckel 23. Der Grundkörper 22 bildet somit mit dem Deckel 23 eine elektromagnetische Abschirmung für die im Innenraum angeordnete Detektoreinheit 24. Die Crimphülse 27, der Grundkörper 22 und der Deckel 23 bestehen hierzu in vorteilhafter Weise aus einem elektrisch leitenden Metall. Vorzugsweise besteht der Grundkörper 22 sowie der Deckel 23 aus dem Metall Zink. Der Grundkörper 22 und der Deckel 23 können kostengünstig im Zink-Druckguss-Verfahren hergestellt werden.

Die Figur 2 zeigt den Grundkörper 22 mit der daran ausgerichteten und daran befestigten Detektoreinheit 24. In der Figur 2 ist auch dargestellt, wie die Crimphülse 27 in den Kanal 262 des Grundkörpers 22 eingelegt ist. Die Crimphülse 27 ist in vorteilhafter Weise eine Bundhülse, die einen Anschlagbund 271 aufweist, der mit einem Absatz des Grundkörpers 22 einen in Zugrichtung des Kabels 25 wirkenden Formschluss und somit eine Zugentlastung für das Kabel 25 bildet.

Die Abtasteinheit 2 ist mittels des Grundkörpers 22 an einem zu messenden Objekt durch Anschrauben ortsfest anbaubar. Die Anschraubung der Abtasteinheit 2 muss besonders stabil und rüttelfest ausgeführt sein. Hierzu sind am Grundkörper 22 mehrere Pfosten 31, 32 ausgebildet, in denen jeweils ein Loch 41, 42 eingebracht ist. Die Pfosten 31, 32 sind einstückig am Grundkörper 22 ausgebildet bzw. angeformt. Die Löcher 41, 42 können Durchgangslöcher ohne Gewinde sein, durch welche Schrauben zum Anschrauben der Abtasteinheit 2 hindurchgeführt werden können. Die Löcher 41, 42 können alternativ auch Innengewinde zum Einschrauben von Schrauben aufweisen, wobei es sich in diesem Fall um durchgehende Schraublöcher oder um Sacklöcher mit Innengewinde handeln kann.

Die Pfosten 31, 32 weisen jeweils eine Außenkontur auf, welche mit einer Innenkontur einer im Deckel 23 vorgesehenen Ausnehmung 51, 52 derart korrespondiert, dass diese eine Presspassung bilden, durch die der Deckel 23 am Grundkörper 22 befestigt ist. Im montierten Zustand deckt der aufgepresste Deckel 23 die Detektoreinheit 24 zumindest staubdicht ab. Die Presspassung wird durch die mechanische Verbindungstechnik Pressfügen hergestellt. Die Pfosten 31, 32 sowie die Ausnehmungen 51, 52 sind dazu so dimensioniert, dass nach dem Fügevorgang an den Fügestellen die Presspassung entsteht. Dabei umschließt die Innenkontur der Ausnehmung 51, 52 jeweils über ihren gesamten Umfang, also über 360°, die ihr zugeordnete Außenkontur des jeweiligen Pfostens 31, 32. Zur Bildung der Presspassung wird der Deckel 23 in Richtung Z relativ zum Grundkörper 22 aufgepresst (Richtung Z ist in Figur 2 eingezeichnet).

Um eine möglichst gute und großflächige Flächenpressung zu erreichen, ist es besonders vorteilhaft, wenn die Ausnehmungen 51, 52 Durchgangsöffnungen sind. Dadurch ist die Presspassung über die gesamte Dicke des Deckels 23 ausgeführt.

Wenn der Grundkörper 22 ein Gussteil - z.B. Druckgussteil - ist, kann aus fertigungstechnischen Gründen die Außenkontur der Pfosten 31, 32 leicht konisch ausgeführt sein. Die konische Ausbildung erleichtert auch das Fügen beim Aufpressvorgang.

Die Außenkontur bzw. die Mantelfläche der Pfosten 31, 32 und / oder der Ausnehmungen 51, 52 kann darüber hinaus eine Profilierung aufweisen, beispielsweise ausgeführt als achsparallele Rändelung bzw. in Form von achsparallelen Schneiden 29. Wenn der Grundkörper 22 ein Druckgussteil ist, weisen die Schneiden 29 beispielsweise eine halbkreisförmige Geometrie auf. Durch das Vorsehen einer Profilierung werden die zulässigen Fertigungstoleranzen der Fügepartner vergrößert. Die Presspassung wird in diesem Fall unter anderem durch lokale Materialverformung bzw. Materialverdrängung der Profilierung - z.B. ausgeführt als Schneiden 29 - gebildet.

Am Grundkörper 22 sind in vorteilhafter Weise deckelseitige Endflächen 61, 62, 63, 64 vorgesehen, welche die Außenfläche des Deckels 23 überragen und somit beim Anschrauben der Abtasteinheit 2 mit einer Anbaufläche des zu messenden Objekts in Kontakt treten und als Anschlagflächen fungieren. Vorteilhaft ist, wenn es sich dabei um mindestens drei Endflächen 61, 62, 63, 64 handelt, die voneinander beabstandet angeordnet sind. Gemäß einer vorteilhaften Ausgestaltung der Erfindung kann zumindest einer der Pfosten 31 durch die korrespondierende Ausnehmung 51 im Deckel 23 vollständig hindurchgeführt sein, so dass seine Endfläche 61 die Außenfläche 230 des Deckels 23 überragt und eine der Anschlagflächen bildet.

Durch die Erfindung wird eine kompakte Bauweise der Abtasteinheit 2 ermöglicht. Der Deckel 23 ist ohne Schrauben oder andere zusätzliche Mittel stabil am Grundkörper 22 befestigt. Eine einfache Montage des Deckels 23 am Grundkörper 22 wird ermöglicht und die benötigten Bauteile sind minimiert. Der Grundkörper 22 mit der darin befestigten Detektoreinheit 24 kann trotz der Kompaktheit stabil aufgebaut werden und durch die stabile und platzsparende Anordnung der Pfosten 31, 32 auch stabil ortsfest an ein zu messendes Objekt angeschraubt werden. Durch die mechanische Verbindungstechnik Pressfügen zwischen Deckel 23 und Grundkörper 22 ist gewährleistet, dass eine Verformung bzw. Verlagerung des die Detektoreinheit 24 tragenden Bereichs des Grundkörpers 22 vermieden wird. Die Positionierung der Detektoreinheit 24 am Grundkörper 22 bleibt erhalten und wird bei dem Pressfügen nicht nachteilig beeinflusst.

## Patentansprüche

1. Abtasteinheit einer Positionsmesseinrichtung, mit einem Gehäuse (21), in dem eine Detektoreinheit (24) zur Abtastung eines Maßstabs (1) angeordnet ist, wobei das Gehäuse (21) einen Grundkörper (22) und einen am Grundkörper (22) befestigten Deckel (23) umfasst, und wobei der Grundkörper (22) mehrere Löcher (41, 42) zum Anschrauben der Abtasteinheit (2) an ein zu messendes Objekt aufweist, **dadurch gekennzeichnet, dass**
an dem Grundkörper (22) mehrere Pfosten (31, 32) ausgebildet sind, wobei in den Pfosten (31, 32) jeweils eines der Löcher (41, 42) eingebracht ist, und wobei die Pfosten (31, 32) jeweils eine Außenkontur aufweisen, welche mit einer Innenkontur einer Ausnehmung (51, 52) im Deckel (23) derart korrespondiert, dass diese eine Presspassung bilden, durch die der Deckel (23) am Grundkörper (22) befestigt ist.

2. Abtasteinheit nach Anspruch 1, wobei am Grundkörper (22) deckelseitige Endflächen (61, 62, 63, 64) vorgesehen sind, welche die Außenfläche (230) des Deckels (23) überragen und wobei diese Endflächen (61, 62, 63, 64) beim Anschrauben an das zu messende Objekt als Anschlagflächen fungieren.

3. Abtasteinheit nach Anspruch 2, wobei zumindest eine der Endflächen (61) von einem der Pfosten (31) gebildet wird, indem dieser durch den Deckel (23) hindurchgeführt ist und die Außenfläche (230) des Deckels (23) überragt.

4. Abtasteinheit nach einem der vorhergehenden Ansprüche, wobei die Mantelfläche der Pfosten (31, 32) jeweils eine Profilierung aufweist.

5. Abtasteinheit nach Anspruch 4, wobei die Profilierung längs der Pfosten (31, 32) verlaufende Schneiden (29) sind.

6. Abtasteinheit nach einem der vorhergehenden Ansprüche, wobei an der Detektoreinheit (24) ein elektrisches Kabel (25) angeschlossen ist, das durch eine Öffnung im Gehäuse (21) nach außen geführt ist.

7. Abtasteinheit nach Anspruch 6, wobei das Kabel (25) eine Crimphülse (27) aufweist, die einerseits mit einem Schirm des Kabels (25) elektrisch leitend verbunden ist und andererseits in der Öffnung das Gehäuse (21) elektrisch kontaktiert.

8. Abtasteinheit nach Anspruch 7, wobei die Öffnung des Gehäuses (21) von einem ersten Kanal (262) im Grundkörper (22) und von einem zweiten Kanal (263) im Deckel (23) gebildet wird, wobei die Crimphülse (27) zwischen den beiden Kanälen (262, 263) angeordnet ist und den Grundkörper (22) sowie den Deckel (23) elektrisch kontaktiert.

9. Abtasteinheit nach einem der vorhergehenden Ansprüche, wobei der Grundkörper (22) und der Deckel (23) aus elektrisch leitendem Metall bestehen.

10. Abtasteinheit nach Anspruch 9, wobei der Grundkörper (22) und der Deckel (23) Zink-Druckgussteile sind.

11. Abtasteinheit nach einem der vorhergehenden Ansprüche, wobei die Löcher (41, 42) jeweils ein Innengewinde aufweisen.

12. Positionsmesseinrichtung mit einem Maßstab (1) und mit einer Abtasteinheit (2) nach einem der vorhergehenden Ansprüche zur Abtastung des Maßstabs (1).

13. Verfahren zur Herstellung einer Abtasteinheit (2) mit folgenden Verfahrensschritten:
• zur Verfügung stellen eines Grundkörpers (22), der einen Aufnahmeraum für eine Detektoreinheit (24), ausgebildet zur Abtastung eines Maßstabs (1), aufweist, wobei der Grundkörper (22) mehrere Löcher (41, 42) zum Anschrauben der Abtasteinheit (2) an ein zu messendes Objekt umfasst, wobei jeweils eines der Löcher (41, 42) in einem Pfosten (31, 32) des Grundkörpers (22) eingebracht ist;
• Positionieren und Befestigen der Detektoreinheit (24) in dem Aufnahmeraum des Grundkörpers (22);
• zur Verfügung stellen eines Deckels (23) zum Abdecken des Aufnahmeraums, wobei in dem Deckel (23) Ausnehmungen (51, 52) eingebracht sind, wobei jeweils eine der Ausnehmungen (51, 52) mit einer Außenkontur eines der Pfosten (31, 32) korrespondiert;
• Befestigen des Deckels (23) am Grundkörper (22) durch Aufpressen, wobei dadurch jeweils zwischen einer Innenkontur einer der Ausnehmungen (51, 52) des Deckels (23) und einer Außenkontur eines der Pfosten (31, 32) eine Presspassung entsteht.

## Claims

1. Scanning unit of a position-measuring device, having
a housing (21) in which a detector unit (24) for scanning a scale (1) is arranged, wherein the housing (21) comprises a base body (22) and a cover (23) which is attached to the base body (22), and wherein the base body (22) has a plurality of holes (41, 42) for screwing the scanning unit (2) onto an object to be measured, **characterized in that**
a plurality of posts (31, 32) are formed on the base body (22), wherein in each case one of the holes (41, 42) is made in the posts (31, 32), and wherein the posts (31, 32) each have an external contour which corresponds to an internal contour of a recess (51, 52) in the cover (23) in such a way that they form a press fit by means of which the cover (23) is fastened to the base body (22).

2. Scanning unit according to Claim 1, wherein cover-side end faces (61, 62, 63, 64) are provided on the base body (22) and project beyond the external face (230) of the cover (23), and wherein these end faces (61, 62, 63, 64) function as stop faces during the screwing on to the object to be measured.

3. Scanning unit according to Claim 2, wherein at least one of the end faces (61) is formed by one of the posts (31) in that the latter is guided through the cover (23) and projects beyond the external face (230) of the cover (23).

4. Scanning unit according to one of the preceding claims, wherein the lateral face of each of the posts (31, 32) has profiling.

5. Scanning unit according to Claim 4, wherein the profiling comprises cutting edges (29) which run along the posts (31, 32).

6. Scanning unit according to one of the preceding claims, wherein an electric cable (25), which is guided outwards through an opening in the housing (21), is connected to the detector unit (24).

7. Scanning unit according to Claim 6, wherein the cable (25) has a crimping sleeve (27) which, on the one hand, is connected in an electrically conductive fashion to a screen of the cable (25) and, on the other hand, makes electrical contact with the housing (21) in the opening.

8. Scanning unit according to Claim 7, wherein the opening in the housing (21) is formed by a first duct (262) in the base body (22) and by a second duct (263) in the lid (23), wherein the crimping sleeve (27) is arranged between the two ducts (262, 263) and makes electrical contact with the base body (22) and the cover (23).

9. Scanning unit according to one of the preceding claims, wherein the base body (22) and the cover (23) are composed of electrically conductive metal.

10. Scanning unit according to Claim 9, wherein the base body (22) and the cover (23) are zinc die-cast parts.

11. Scanning unit according to one of the preceding claims, wherein the holes (41, 42) each have an internal thread.

12. Positioning-measuring device having a scale (1) and having a scanning unit (2) according to one of the preceding claims, for scanning the scale (1).

13. Method for manufacturing a scanning unit (2) having the following method steps:
• making available a base body (22) which has a receptable space for a detector unit (24) which is designed to scan a scale (1), wherein the base body (22) comprises a plurality of holes (41, 42) for screwing the scanning unit (2) onto an object to be measured, wherein in each case one of the holes (41, 42) is made in a post (31, 32) of the base body (22);
• positioning and fastening the detector unit (24) in the receptacle space of the base body (22),
• making available a cover (23) for covering the receptacle space, wherein recesses (51, 52) are formed in the cover (23), wherein in each case one of the recesses (51, 52) corresponds to an external contour of one of the posts (31, 32);
• fastening the cover (23) to the base body (22) by pressing on, wherein as a result a press fit is produced in each case between an internal contour of one of the recesses (51, 52) in the cover (23) and an external contour of one of the posts (31, 32).

## Revendications

1. Unité de balayage d'un dispositif de mesure de position, comprenant
un boîtier (21) dans lequel est disposée une unité de détection (24) pour balayer une échelle (1), le boîtier (21) comprenant un corps de base (22) et un couvercle (23) fixé au corps de base (22), et le boîtier (22) présentant plusieurs trous (41, 42) pour visser l'unité de balayage (2) sur un objet à mesurer,
**caractérisée en ce que** plusieurs montants (31, 32) sont réalisés sur le corps de base (22), au moins l'un des trous (41, 42) étant pratiqué dans les montants (31, 32), et les montants (31, 32) présentant respectivement un contour extérieur qui correspond à un contour intérieur d'un évidement (51, 52) dans le couvercle (23) de telle sorte qu'ils forment un ajustage serré qui fixe le couvercle (23) sur le corps de base (22).

2. Unité de balayage selon la revendication 1, dans laquelle des surfaces d'extrémité (61, 62, 63, 64) côté couvercle sont prévues sur le corps de base (22) et dépassent de la surface extérieure (230) du couvercle (23), et dans laquelle ces surfaces d'extrémité (61, 62, 63, 64) servent de surfaces de butée au moment du vissage sur l'objet à mesurer.

3. Unité de balayage selon la revendication 2, dans laquelle au moins l'une des surfaces d'extrémité (61) est formée par l'un des montants (31) en ce que celui-ci est guidé à travers le couvercle (23) et dépasse de la surface extérieure (230) du couvercle (23).

4. Unité de balayage selon l'une quelconque des revendications précédentes, dans laquelle la surface latérale des montants (31, 32) présente respectivement un profilage.

5. Unité de balayage selon la revendication 4, dans laquelle le profilage correspond à des arêtes vives (29) s'étendant le long des montants (31, 32).

6. Unité de balayage selon l'une quelconque des revendications précédentes, dans laquelle un câble électrique (25) est connecté à l'unité de détection (24) et est amené à l'extérieur à travers un orifice dans le boîtier (21).

7. Unité de balayage selon la revendication 6, dans laquelle le câble (25) présente une douille de sertissage (27) qui est d'une part reliée de manière électriquement conductrice à un blindage du câble (25), et établit d'autre part un contact électrique avec le boîtier (21) dans l'orifice.

8. Unité de balayage selon la revendication 7, dans laquelle l'orifice du boîtier (21) est formé par un premier canal (262) dans le corps de base (22) et par un deuxième canal (263) dans le couvercle (23), la douille de sertissage (27) étant disposée entre les deux canaux (262, 263) et établissant un contact électrique avec le corps de base (22) ainsi qu'avec le couvercle (23).

9. Unité de balayage selon l'une quelconque des revendications précédentes, dans laquelle le corps de base (22) et le couvercle (23) sont composés d'un métal électriquement conducteur.

10. Unité de balayage selon la revendication 9, dans laquelle le corps de base (22) et le couvercle (23) sont des pièces en zinc coulées sous pression.

11. Unité de balayage selon l'une quelconque des revendications précédentes, dans laquelle les trous (41, 42) présentent respectivement un taraudage.

12. Dispositif de mesure de position doté d'une échelle (1) et d'une unité de balayage (2) selon l'une quelconque des revendications précédentes pour balayer l'échelle (1).

13. Procédé de fabrication d'une unité de balayage (2), comprenant les étapes de procédé suivantes consistant à :
- fournir un corps de base (22) qui présente un espace de réception pour une unité de détection (24) réalisée pour balayer une échelle (1), le corps de base (22) comprenant plusieurs trous (41, 42) pour visser l'unité de balayage (2) sur un objet à mesurer, chacun des trous (41, 42) étant pratiqué dans un montant (31, 32) du corps de base (22) ;
- positionner et fixer l'unité de détection (24) dans l'espace de réception du corps de base (22) ;
- fournir un couvercle (23) pour couvrir l'espace de réception, des évidements (51, 52) étant pratiqués dans le couvercle (23), respectivement l'un des évidements (51, 52) correspondant à un contour extérieur d'un des montants (31, 32) ;
- fixer le couvercle (23) au corps de base (22) par engagement par pression, un ajustage serré étant ainsi créé respectivement entre un contour intérieur d'un des évidements (51, 52) du couvercle (23) et un contour extérieur d'un des montants (31, 32).
